(19) Europäisches Patentamt
European Patent Office
Office européen des brevets

(11) **EP 1 826 544 B1**

(12) **EUROPÄISCHE PATENTSCHRIFT**

(45) Veröffentlichungstag und Bekanntmachung des Hinweises auf die Patenterteilung:
**07.09.2016   Patentblatt 2016/36**

(51) Int Cl.:
*G01L 9/00* (2006.01)      *G01L 27/00* (2006.01)

(21) Anmeldenummer: **07003523.3**

(22) Anmeldetag: **21.02.2007**

(54) **Verfahren zum Kalibrieren eines elektrischen oder elektronischen Sensors**

Method for calibrating an electric or electronic sensor

Procédé de calibrage d'un capteur électrique ou électronique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.02.2006   AT 3172006**

(43) Veröffentlichungstag der Anmeldung:
**29.08.2007   Patentblatt 2007/35**

(73) Patentinhaber: **Vaillant GmbH**
**42859 Remscheid (DE)**

(72) Erfinder: **Remaud, René**
**44860 Saint Aignan de Grand Lieu (FR)**

(74) Vertreter: **Hocker, Thomas**
**Vaillant GmbH**
**Berghauser Strasse 40**
**42859 Remscheid (DE)**

(56) Entgegenhaltungen:
EP-A- 1 258 717      EP-A1- 0 531 696
DE-A1- 4 343 497      DE-A1- 10 148 859
DE-U1- 9 108 159      FR-A- 2 807 514
US-A- 4 708 010      US-A- 4 909 063

**Beschreibung**

Die Erfindung bezieht sich auf ein Verfahren zum Kalibrieren eines elektrischen oder elektronischen Sensors mit einem Membrankörper, welcher auf einem drucksensiblen Sensorelement aufliegt, sowie einem dazugehörigen Sensor.

Derartige Sensoren werden beispielsweise eingesetzt, um einen Druck- oder Volumenstrom an einen anderen Druck- oder Volumenstrom anzupassen. Auf Grund von Temperatureinflüssen und Alterungserscheinungen kann es zu Verschiebungen des Signals bei unbelastetem Zustand kommen. Daher ist es notwendig, dass in bestimmten Zeitabständen eine Kalibrierung des Sensors erfolgt.

DE 91 08 159 U beschreibt einen Membran-Differenzdruckschalter, bei dem eine Membran zwei Kammern trennt. Wird die Membran entsprechend weit in eine Richtung bewegt, so schaltet sie einen Schalter.

US 4 909 063 A offenbart eine Vorrichtung und ein Verfahren zum Kalibrieren eines Drucksensors mit Hilfe einer Kalibrierungsvorrichtung, mit der der Sensor verbunden ist. Die Kalibriervorrichtung verfügt über eine Kammer, die durch eine Membran geteilt ist. Zur Nullpunktskalibrierung wird sichergestellt, dass die Membran sich frei bewegen kann. Da die Federrate der Membran sehr niedrig ist, bewegt sich die Membran derart, dass auf beiden Seiten der Membran gleicher Druck anliegt. Da beide druckbeaufschlagten Seiten der Kalibriervorrichtung mit den beiden Eingängen des Sensors verbunden sind, muss auch an diesen Eingängen gleicher Druck anliegen. Das in diesem Verfahrensschritt gemessene Signal entspricht dem Nullsignal des Sensors. Zur weiteren Kalibrierung werden die beiden Eingänge des Sensors mit unterschiedlichen Drücken pL, pH beaufschlagt und dementsprechend die Kennlinie erfasst.

US 4 708 010 offenbart einen Drucksensor, bei dem zur Kalibrierung ein definierter Druck aufgebaut wird. Auch dieses Verfahren kann im eingebauten Zustand des Sensors am Betriebsort nicht durchgeführt werden.

DE 43 43 497 A1 beschreibt einen Differenzdrucksensor, bei dem ein mit einer Membran verbundener Stößel auf einen Biegebalken, welcher als Sensorelement dient, drückt.

Aus EP 1 258 717 A1 ist eine Drucksensor bekannt, bei dem zur Eichung mittels eines mit einem Magneten verbundenen Kolben eine definierte Kraft auf eine Membran ausgeübt wird.

EP 531 696 A1 zeigt einen Drucksensor, bei dem eine Membran zwischen zwei Kammern mittels eines Stabes auf einen Biegebalken mit aufgebrachten Messelementen drückt, wodurch Druckdifferenzen zwischen den Eingängen der beiden Kammern gemessen werden können.

Befindet sich der Sensor im eingebauten Zustand, so ist es gemäß dem Stand der Technik schwierig, eine genaue Kalibrierung durchzuführen, wenn nicht ausgeschlossen werden kann, dass eine Messkammer des Sensors druckbelastet ist. So kann beispielsweise bei Heizgeräten über den Kamin Wind in ein Gerät gelangen und somit eine Messkammer eines Sensors druckbelasten. Würde dann eine Kalibrierung erfolgen, so wäre das Messergebnis verfälscht.

Der Erfindung liegt die Aufgabe zugrunde, bei einem Kalibrierverfahren zu gewährleisten, dass Fremdeinflüsse nicht das Messergebnis beeinflussen.

Erfindungsgemäß wird dies bei einem elektrischen oder elektronischen Sensor mit einem Membrankörper, welcher auf einem drucksensiblen Sensorelement aufliegt, gemäß den Merkmalen des unabhängigen Anspruchs 1 dadurch erreicht, dass der Membrankörper und das drucksensible Sensorelement voneinander entkoppelt werden. Hierdurch lässt sich das unbelastete Ausgangssignal des drucksensiblen Sensorelements bestimmen. Das drucksensible Sensorelement ist vorzugsweise ein Biegebalken mit integrierter piezoresistiver Wheatstone-Brücke.

Im Sinne dieses Anspruchs ist unter einem aufliegenden Membrankörper nicht nur ein Membrankörper, der sich mittels Schwerkraft oberhalb des Sensorelementes befindet, zu verstehen, sondern auch jede andere Einbaulage, welche eine Berührung und Druckübertragung zulässt.

Liegt im unbelasteten Fall der Membrankörper auf dem Sensorelement auf, so erzeugt er durch seine Masse einen Druck auf das drucksensible Sensorelement. Dementsprechend weicht die Ausgangsspannung bei unbelastetem Sensor um den von der Membrankörpermasse verursachten Druck von dem zuvor bestimmten Ausgangssignal ab. Dementsprechend wird gemäß den Merkmalen des abhängigen Anspruchs 2 der Druck, welcher aus der Membrankörpermasse auf das Sensorelement resultiert, bei der Bestimmung des Null-Signals berücksichtigt.

Gemäß den Merkmalen des abhängigen Anspruchs 3 wird bei der Membrankörpermasse berücksichtigt, dass eine eventuelle Halterung Massekräfte aufnimmt und somit nicht die gesamte Körpermasse auf das Sensorelement drückt. Gegebenenfalls sind Einspannkräfte verstärkend zu berücksichtigen, wenn im unbelasteten Zustand durch die Einspannung des Membrankörpers Kräfte auf das Sensorelement übertragen werden.

Gemäß den Merkmalen des abhängigen Anspruchs 4 ist der Membrankörper zumindest teilweise magnetisch und die Bewegung des Membrankörpers erfolgt mittels der Magnetkraft eines Elektromagneten. Der Elektromagnet sollte keinen magnetischen Kern enthalten, um Magnetkräfte nach dem Abschalten des Magnetstroms zu vermeiden.

Gemäß den Merkmalen des unabhängigen Anspruchs 5 wird ein Sensor, welcher zur Durchführung des zuvor beschriebenen Verfahrens geeignet ist, geschützt.

Die Erfindung wird nun anhand der Figuren detailliert erläutert.

Hierbei zeigt

Figur 1 einen erfindungsgemäßen Sensor sowie

Figur 2 eine Sensorkennlinie.

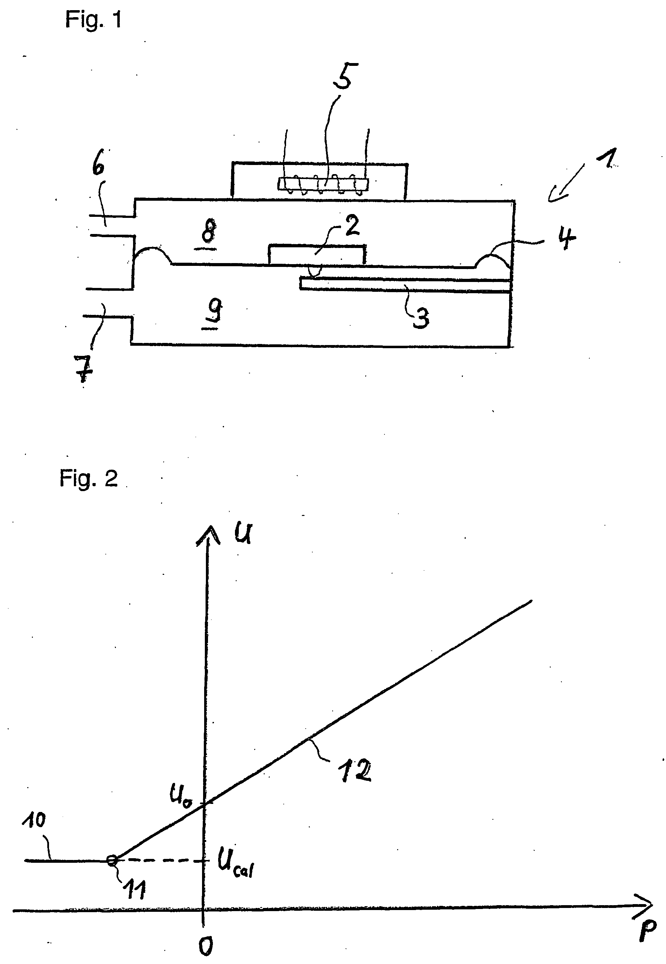

Figur 1 zeigt einen Sensor 1 mit zwei Messkammern 8, 9, welche durch eine Membran 4 getrennt sind. An den Messkammern 8, 9 befinden sich Anschlüsse 6, 7. Auf der Membran 4 befindet sich ein Membrankörper 2, welcher in bevorzugter Ausführungsform zumindest teilweise magnetisch ist. In der Messkammer 9 befindet sich ein drucksensibles Sensorelement 3, bei dem es sich in bevorzugter Ausführungsform um einen Biegebalken mit integrierter piezoresistiver Wheatstone-Brücke handelt. Parallel zur Membran 4 und dem drucksensiblen Sensorelement 3 ist ein Elektromagnet 5 angebracht.

Im Betrieb werden an die Anschlüsse 6, 7 zwei unterschiedliche Messpunkte angeschlossen. In der Regel ist bei einem derartig aufgebauten Sensor der Druck in der Messkammer 8 größer oder gleich dem Druck in der Messkammer 9. Je höher der Druck in der Messkammer 8 im Vergleich zum Druck in der Messkammer 9 ist, desto mehr wird die Membran 4 mit dem Membrankörper 2 nach unten gedrückt, wodurch der Membrankörper 2 das drucksensible Sensorelement 3 in Form des Biegebalkens nach unten drückt. Hierdurch verändern sich die Widerstände der Wheatstone-Brücke, wodurch die Wheatstone-Brücke ein der Druckdifferenz äquivalentes Signal erfasst.

Figur 2 zeigt eine Kennlinie eines Sensors 1 gemäß Figur 1. Der Bereich 10 deutet den Bereich an, in dem der Membrankörper 2 keinen Druck auf das Sensorelement 3 ausübt und somit die Wheatstone-Brücke ihr Grundsignal liefert. Im Punkt 11 liegt der Membrankörper 2 drucklos auf dem Sensorelement 3 auf. Im Bereich 12 übt der Membrankörper 2 einen entsprechenden Druck auf das Sensorelement aus, so dass mit steigendem Druck die Ausgangsspannung U zunimmt.

Zum erfindungsgemäßen Kalibrieren wird der Elektromagnet 5 bestromt, wodurch der Membrankörper 2 von dem Elektromagneten 5 angezogen wird. Wird der elektrische Strom auf den Elektromagneten 5 erhöht, ohne dass die Ausgangsspannung U sich verändert, so kann der Membrankörper 2 nicht mehr mit dem Sensorelement 3 in Kontakt sein. Das Sensorelement 3 ist sodann drucklos, an der Wheatstone-Brücke kann somit die Spannung $U_{cal}$ abgegriffen werden. Wird der Sensor in der dargestellten Weise eingebaut, und übernimmt die Membran 4 keine nennenswerten Haltekräfte, so ist bekannt, dass bei gleichem Druck in den Kammern 8, 9 das Gewicht des Membrankörpers 2 auf das Sensorelement 3 drückt. Somit ergibt sich für die Bestimmung des unbelasteten Sensorsignals $U_0$

$$U_0 = U_{cal} + m_{Membrankörper} * g * Sensorrate$$

mit dem unbelasteten Sensorsignal $U_0$ [V], dem Ausgangssignal $U_{cal}$ [V], der Membrankörpermasse $m_{Membrankörper}$ [g], der Erdbeschleunigung g (9,81 m/s$^2$) und der Sensorrate [V/N].

Es ist zu beachten, dass bei senkrechtem oder diagonalem Einbau die Membrankörpermasse in anderer Weise berücksichtigt werden muss. Ferner werden über die Einspannung der Membran auch Membrankörpermasseanteile aufgenommen, so dass nicht die komplette Masse auf dem drucksensiblen Element lastet.

Erfindungsgemäß ist auch vorstellbar, dass der Membrankörper von einem Elektromagneten nicht angezogen, sondern von einem anders platzierten Elektromagneten abgestoßen wird. Ebenfalls denkbar ist, den Membrankörper mechanisch zu bewegen. Ferner kann bei einem derartigen Sensor die Messkammer 9 mit einem derartig hohen Druck belastet werden, dass der Membrankörper 2 vom Biegebalken abhebt und der Biegebalken somit lastfrei ist.

In einer bevorzugten Ausgestaltung wird ein derartiger Sensor in einem Heizgerät eingesetzt, um den Brenngasstrom dem Luftvolumenstrom anzupassen. Hierzu wird der Luftvolumenstrom auf die Messkammer 8 gegeben, während der Brenngasvolumenstrom mit der Messkammer 9 verbunden wird. Soll bei einem Heizgerät die Heizleistung erhöht werden, so wird in der Regel der Luftvolumenstrom mittels eines regelbaren Ventilators erhöht. In diesem Fall würde der dynamische Druck des Luftstroms zunehmen. Ist dieser mit dem Anschluss 6 verbunden, so würde der Druck in der Messkammer 8 erhöht, während er zunächst in der Messkammer 9 konstant bliebe. Hierdurch würde der Membrankörper 2 nach unten gedrückt, wodurch er das drucksensible Sensorelement 3 nach unten böge. Über die Auswertung des Widerstandes des Sensorelements 3 könnte eine Regelung feststellen, dass der Luftvolumenstrom und der Brenngasvolumenstrom nicht im vorgesehenen Verhältnis zueinander stehen. Dementsprechend würde der Brenngasvolumenstrom solange erhöht, bis über den dynamischen Druck des Brenngasvolumenstroms, welcher mittels Anschluss 7 in der Messkammer 9 gemessen wird, die Drücke in den Messkammern 8, 9 wieder in einem entsprechenden Gleichgewicht stünden. Statt des dynamischen Drucks kann auch der statische Druck mit entsprechenden Änderungen beim Messalgorithmus zur Messung verwendet werden.

**Patentansprüche**

1. Verfahren zum Kalibrieren eines elektrischen oder elektronischen Sensors (1) mit zwei Messkammern (8, 9), welche durch eine Membran (4) getrennt sind, einem Membrankörper (2), welcher sich auf der Membran (4) befindet und auf einem drucksensiblen Sensorelement (3), insbesondere einem Biegebalken mit integrierter piezoresistiver Wheatstone-Brücke, in einer Messkammer (9) aufliegt, **dadurch gekennzeichnet, dass** zum Kalibrieren des Sensors (1) der Membrankörper (2) durch Aufbringung einer Kraft vom drucksensiblem Sensorelement (3) entfernt wird, so dass kein Kontakt zwischen Membrankörper (2) und Sensorelement (3) besteht und in diesem Zustand das Ausgangssignal $U_{cal}$ des Sensors (1) erfasst wird.

2. Verfahren zum Kalibrieren eines elektrischen oder elektronischen Sensors (1) nach Anspruch 1, **dadurch gekennzeichnet, dass** zur Bestimmung des unbelasteten Sensorsignals $U_0$ bei gleichem Druck in den Kammern (8, 9) zum Ausgangssignal $U_{cal}$ im Kalibrierungszustand der errechnete Wert, der sich aus dem Produkt des Gewichts des Membrankörper (2) multipliziert mit der Sensorrate ergibt, addiert wird.

3. Verfahren zum Kalibrieren eines elektrischen oder elektronischen Sensors (1) nach Anspruch 2, **dadurch gekennzeichnet, dass** die Membrankörpermasse dahingehend korrigiert wird, dass die Haltekräfte durch die Einspannung des Membrankörpers (2) berücksichtigt werden.

4. Verfahren zum Kalibrieren eines elektrischen oder elektronischen Sensors (1) nach einem der Ansprüche 1 bis 3, **dadurch gekennzeichnet, dass** der Membrankörper (2) zumindest teilweise magnetisch ist und die Bewegung des Membrankörpers (2) mittels Magnetkraft eines Elektromagneten (5) erfolgt.

5. Elektrischer oder elektronischer Sensor (1) mit zwei Messkammern (8, 9), welche durch eine Membran (4) getrennt sind, einem zumindest teilweise magnetischen Membrankörper (2), welcher sich auf der Membran (4) befindet und auf einem drucksensiblen Sensorelement (3), insbesondere einem Biegebalken mit integrierter piezoresistiver Wheatstone-Brücke, in einer Messkammer (9) aufliegt, **dadurch gekennzeichnet, dass** ein Elektromagnet (5) zum Entfernen des Membrankörpers (2) vom Sensorelement (3) vorhanden ist.

**Claims**

1. A method for calibrating an electrical or electronic sensor (1) having two measuring chambers (8, 9) separated by a membrane (4), a membrane body (2) disposed on the membrane (4) and resting on a pressure sensitive sensor element (3), in particular a bending beam with an integrated piezoresistive Wheatstone bridge, in a measuring chamber (9), **characterized in that** for calibrating the sensor (1), the membrane body (2) is removed from the pressure sensitive sensor element (3) by applying a force, such that there is no contact between the membrane body (2) and the sensor element (3) and the output signal $U_{cal}$ of the sensor (1) is detected in this condition.

2. The method for calibrating an electrical or electronic sensor (1) according to claim 1, **characterized in that** for determining the unloaded sensor signal $U_0$ with the same pressure in chambers (8, 9) the value calculated as the product of the weight of the membrane body (2) multiplied with the sensor rate is added to the output signal $U_{cal}$ in a calibration state.

3. The method for calibrating an electrical or electronic sensor (1) according to claim 2, **characterized in that** the membrane body mass is corrected so as to take into account the holding forces in clamping the membrane body (2).

4. The method for calibrating an electrical or electronic sensor (1) according to any of claims 1 to 3, **characterized in that** the membrane body (2) is at least partly magnetic and movement of the membrane body (2) occurs through magnetic force of an electromagnet (5).

5. An electrical or electronic sensor (1) having two measuring chambers (8, 9) separated by a membrane (4), an at least partially magnetic membrane body (2) disposed on the membrane (4) and resting on a pressure sensitive sensor element (3), in particular a bending beam with an integrated piezoresistive Wheatstone bridge, in a measuring chamber (9), **characterized in that** an electromagnet (5) is provided for removing the membrane body (2) from the sensor element (3).

**Revendications**

1. Procédé d'étalonnage d'un capteur électrique ou électronique (1) avec deux chambres de mesure (8, 9), qui sont séparées par une membrane (4), un corps de membrane (2), qui se trouve sur la membrane (4) et s'applique sur un élément capteur sensible à la pression (3), en particulier une poutre de flexion avec des ponts de Wheatstone piézorésistifs, dans une chambre de mesure (9), **caractérisé en ce que**, pour étalonner le capteur (1), le corps de membrane (2) est éloigné de l'élément capteur sensible à la pression (3) par application d'une force de sorte qu'aucun contact n'ait lieu entre le corps de membrane (2) et l'élément capteur (3) et que le signal de sortie $U_{cal}$ du capteur (1) soit détecté dans cette situation.

**2.** Procédé d'étalonnage d'un capteur électrique ou électronique (1) selon la revendication 1, **caractérisé en ce que**, pour déterminer le signal de capteur $U_0$ non sollicité, on ajoute au signal de sortie $U_{cal}$ en situation d'étalonnage à la même pression dans les chambres (8, 9) la valeur calculée qui résulte du produit du poids du corps de membrane (2) multiplié par la vitesse du capteur.

**3.** Procédé d'étalonnage d'un capteur électrique ou électronique (1) selon la revendication 2, **caractérisé en ce que** la masse du corps de membrane est corrigée de sorte que les forces de retenue par blocage du corps de membrane (2) soient prises en compte.

**4.** Procédé d'étalonnage d'un capteur électrique ou électronique (1) selon l'une quelconque des revendications 1 à 3, **caractérisé en ce que** le corps de membrane (2) est au moins en partie magnétique et le déplacement du corps de membrane (2) se fait au moyen de la force magnétique d'un électroaimant (5).

**5.** Capteur électrique ou électronique (1) avec deux chambres de mesure (8, 9) qui sont séparées par une membrane (4), un corps de membrane au moins en partie magnétique (2) qui se trouve sur le membrane (4) et s'applique sur un élément capteur thermosensible (3), en particulier une poutre de flexion avec des ponts de Wheatstone piézorésistifs, dans une chambre de mesure (9), **caractérisé en ce qu'**un électroaimant (5) est prévu pour éloigner le corps de membrane (2) de l'élément de capteur (3).

Fig. 1

Fig. 2

**IN DER BESCHREIBUNG AUFGEFÜHRTE DOKUMENTE**

**In der Beschreibung aufgeführte Patentdokumente**

- DE 9108159 U
- US 4909063 A
- US 4708010 A
- DE 4343497 A1
- EP 1258717 A1
- EP 531696 A1